# EUROPÄISCHE PATENTANMELDUNG

(11) **EP 1 876 371 A2**
(43) Veröffentlichungstag der Anmeldung: **09.01.2008**
(21) Anmeldenummer: 07012242.9
(22) Anmeldetag: 22.06.2007
(51) Int. Cl.: F16D 25/08

(54) **Fluidbetätigbares Kupplungsausrücksystem für eine Reibungskupplung**

(30) Priorität: 08.07.2006 DE 102006031651
(71) Anmelder: ZF Friedrichshafen AG, 88038 Friedrichshafen (DE)
(72) Erfinder: Lindner, Joachim, 97456 Hambach-Dittelbrunn (DE); Weidinger, Reinhold, 97509 Kolitzheim (DE); Neumann, Klaus, 97464 Niederwerrn (DE); Welke, Knut, 14612 Falkensee/Waldheim (DE); Förster, Bernd, 97456 Dittelbrunn (DE); Purretat, Wolfgang, 97705 Burkardroth/Zahlbach (DE); Streichsbier, Jürgen, 96166 Kirchlauter/Neubrunn (DE); Dzinic, Miro, 97271 Kleinrinderfeld (DE); Brunner, Matthias, 97422 Schweinfurt (DE); Triebel, Michael, 97516 Oberschwarzach (DE); Kücks, Wolfgang, 97422 Schweinfurt (DE)

(57) **Zusammenfassung**

Die Erfindung betrifft ein fluidbetätigbares Kupplungsausrücksystem (1) für eine Reibungskupplung (2), insbesondere für ein Kraftfahrzeug, das einen mit Druckfluid beaufschlagbaren Betätigungszylinder (3) aufweist, in dem ein ein Kupplungselement (4, 5) axial bewegender Kolben (6) verschieblich angeordnet ist, wobei das Kupplungselement (4, 5) konzentrisch zu einer Welle (7) angeordnet ist und wobei der Betätigungszylinder (3) und der Kolben (6) einen Druckraum (8) einschließen, der von einer Fluidversorgungsleitung (9, 10) mit Druckfluid versorgt wird. Um den Bauraum des Kupplungsausrücksystems kompakter zu gestalten, ist erfindungsgemäß vorgesehen, dass sich die Fluidversorgungsleitung (9, 10) zumindest teilweise axial durch die Welle (7) erstreckt.

## Beschreibung

Die Erfindung betrifft ein fluidbetätigbares Kupplungsausrücksystem für eine Reibungskupplung, insbesondere für ein Kraftfahrzeug, das einen mit Druckfluid beaufschlagbaren Betätigungszylinder aufweist, in dem ein ein Kupplungselement axial bewegender Kolben verschieblich angeordnet ist, wobei das Kupplungselement konzentrisch zu einer Welle angeordnet ist und wobei der Betätigungszylinder und der Kolben einen Druckraum einschließen, der von einer Fluidversorgungsleitung mit Druckfluid versorgt wird.

Kupplungsausrücksysteme dieser Art sind beispielsweise aus der DE 41 29 370 A1, aus der DE 41 30 525 A1 und aus der DE 43 13 346 A1 bekannt. Dort ist die Getriebeeingangswelle eines Kfz-Getriebes von einem konzentrisch zur Wellenachse angeordneten Kolben-Zylinder-System umgeben. Der Zylinder stützt sich an einer Wand des Getriebes axial ab. Der Kolben ist mit einem Kupplungsausrücklager verbunden. Bei der Beaufschlagung des Kolben-Zylinder-Systems mit Hydraulikfluid verschiebt der Kolben über das Kupplungsausrücklager eine Tellerfeder und über diese eine Anpressplatte auf eine Kupplungsscheibe, die zwischen der Anpressplatte und einem Schwungrad angeordnet ist.

Bei manchen Lösungen ist die Zuleitung des Hydraulikfluids in den Druckraum des Kolben-Zylinder-Systems aufgrund der Platzverhältnisse problematisch. Der Zylinder weist bei den vorbekannten Konzepten einen Anschluss für eine Hydraulikleitung auf, wobei sich der Anschluss radial, gegebenenfalls unter einem kleinen Winkel, vom Zylinder weg erstreckt. Nachteilig ist, dass hierfür ein Bauraum benötigt wird, der nicht immer zur Verfügung steht. Ferner stellt die anzuschließende Hydraulikleitung ein weiteres benötigtes Bauteil dar, was entsprechende Kosten verursacht.

Der Erfindung liegt daher die Aufgabe zugrunde, ein Kupplungsausrücksystem der eingangs genannten Art so weiterzubilden, dass die genannten Nachteile vermieden werden. Insbesondere soll sich das System also durch eine kompaktere Bauweise auszeichnen, die auch kostengünstiger realisierbar ist.

Die Lösung dieser Aufgabe durch die Erfindung ist dadurch gekennzeichnet, dass sich die Fluidversorgungsleitung zumindest teilweise axial durch die Welle erstreckt. Bei der Welle handelt es sich insbesondere um die Eingangswelle eines Getriebes. Das betätigte Kupplungselement ist insbesondere eine Tellerfeder und eine von dieser beaufschlagte Anpressplatte.

Zumindest ein Teil der Fluidversorgungsleitung ist bevorzugt als koaxiale Bohrung in der Welle ausgebildet. Die Fluidversorgungsleitung kann weiterhin einen Teil aufweisen, der als radiale Bohrung in der Welle ausgebildet ist. Die radiale Bohrung kann etwa in axialer Höhe des Druckraums angeordnet sein. Weiterhin kann die radiale Bohrung in der Welle in einen im Betätigungszylinder eingebrachten ringförmig ausgebildeten Raum münden. Die weitere Übertragung des Hydrauliköls kann durch eine als mindestens eine radiale Bohrung ausgebildete fluidische Verbindung zwischen dem ringförmig ausgebildeten Raum und dem Druckraum erfolgen. Bevorzugt ist der ringförmig ausgebildete Raum zur Welle mittels mindestens eines Dichtungselements, insbesondere mit mindestens einer Radialwellendichtung, abgedichtet.

Mit Vorteil sind der Betätigungszylinder und der Kolben als konzentrisch zur Welle angeordnete Elemente ausgebildet. Diese Bauart ist als CSC (Concentric Slave Cylinder) bekannt.

Zwischen dem Betätigungszylinder und der Welle kann ein Radiallagerelement angeordnet sein. Dieses ist bevorzugt als Gleitlagerhülse ausgebildet.

Eine Weiterbildung sieht vor, dass an dem dem Druckraum zugewandten axialen Ende des Kolbens ein Dichtungselement angeordnet ist.

Weiterhin kann eine Ablaufbohrung vorgesehen werden, die mit dem Bereich zumindest eines der Dichtungselemente und/oder mit dem Bereich des Radiallagerelements fluidisch in Verbindung steht. Dabei kann die fluidische Verbindung zwischen dem Bereich der Dichtungselemente bzw. des Radiallagerelements und der Ablaufbohrung durch eine sich axial erstreckende Verbindungsbohrung gebildet werden, von der aus sich mindestens ein radialer Bohrungsabschnitt erstreckt. Die Ablaufbohrung kann sich dabei unter einem Winkel zwischen 15° und 50° zur Achsrichtung der Welle nach unten erstrecken.

Eine fertigungstechnisch günstige Ausgestaltung sieht vor, dass ein Teil der Fluidversorgungsleitung von einer die Welle durchsetzenden koaxialen Bohrung gebildet wird, die mit einem Verschlusselement an einer axialen Position verschlossen ist.

Mit der vorgeschlagenen Ausgestaltung wird eine sehr kompakte Versorgung des Kolben-Zylinder-Systems des Kupplungsausrückers möglich, der sich in wirtschaftlicher Weise herstellen lässt.

In der Zeichnung ist ein Ausführungsbeispiel der Erfindung dargestellt. Es zeigen:

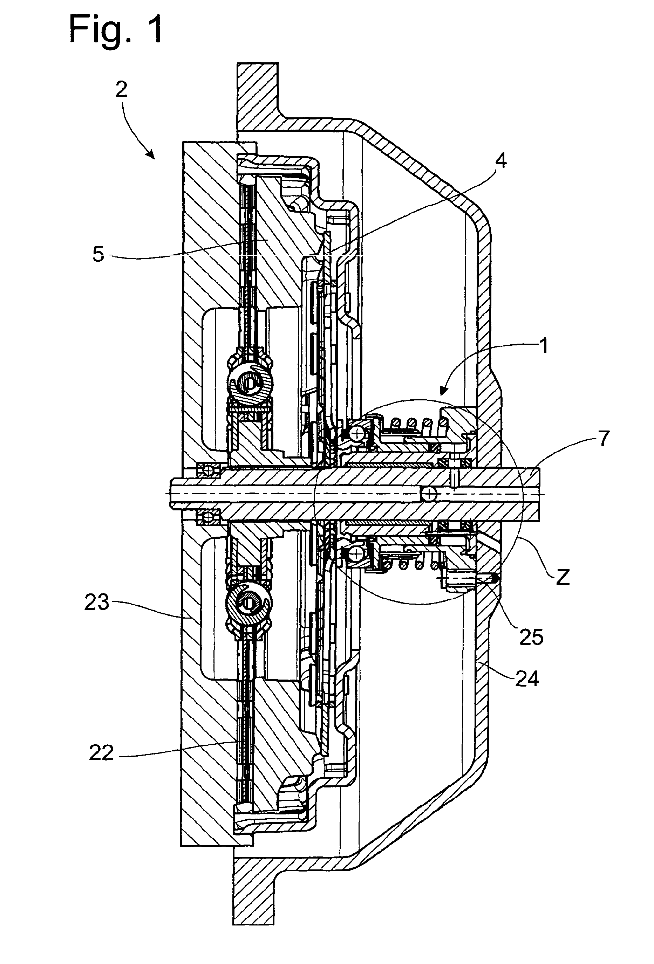

- Fig. 1: den Radialschnitt durch die Reibungskupplung eines Kraftfahrzeugs und

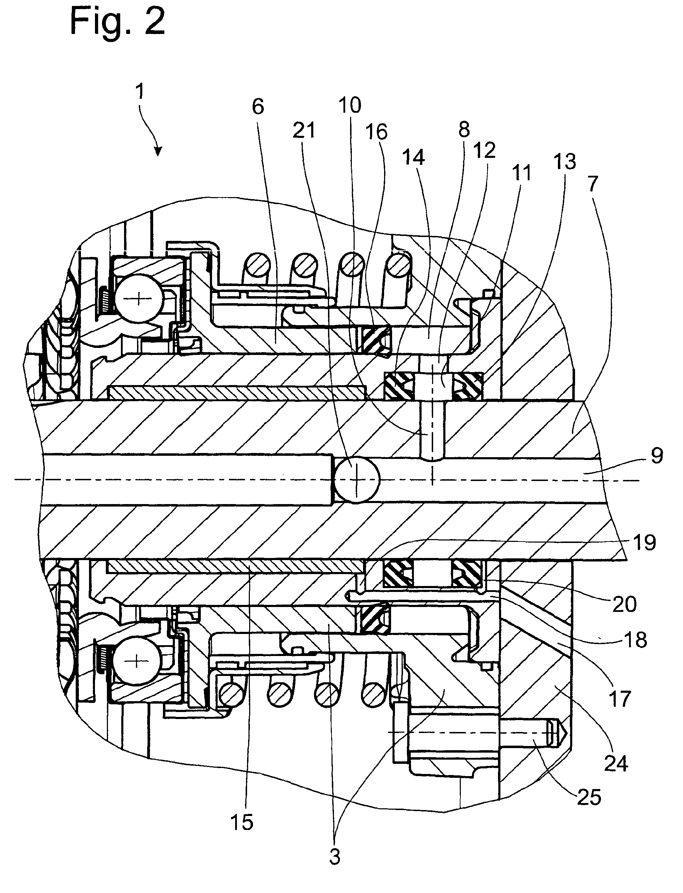

- Fig. 2: eine vergrößerte Darstellung des Ausschnitts "Z" gemäß Fig. 1.

In den Figuren ist eine Reibungskupplung 1 zu sehen, die zur Übertragung des Drehmoments von einem Verbrennungsmotor zu einem Getriebe dient. Bei dem Getriebe handelt es sich bevorzugt um ein Automatikgetriebe. Die Reibungskupplung 2 hat eine Kupplungsscheibe 22, die zwischen einer Anpressplatte 5 und einem Schwungrad 23 angeordnet ist. Die Anpressplatte 5 kann von einer Tellerfeder 4 axial mit einer Kraft beaufschlagt werden, wodurch es zum Reibschluss zwischen Anpressplatte 5, Kupplungsscheibe 22 und Schwungrad 23 kommt. So wird ein Drehmoment vom Verbrennungsmotor zum Getriebe übertragen.

Hierzu wird die Tellerfeder 4 von einem Kupplungsausrücksystem 1 axial bewegt. Das Kupplungsausrücksystem 1 besteht im wesentlichen aus einem Betätigungszylinder 3, der koaxial um eine Getriebeeingangswelle 7 herum angeordnet ist. In einer ringraumartigen Ausnehmung im Betätigungszylinder 3 ist ein als Ringkolben ausgebildeter Kolben 6 angeordnet. Dabei wird zwischen Betätigungszylinder und Kolben ein Druckraum 8 eingeschlossen, der über Versorgungsleitungen 9, 10 mit Druckfluid, vorzugsweise mit Hydrauliköl, beaufschlagt werden kann.

Der Betätigungszylinder 3 ist über ein als Gleitlagerhülse ausgebildetes Radiallagerelement auf der Getriebeeingangswelle 7 gelagert. Der Betätigungszylinder 3 stützt sich (nach rechts) axial gegen die Wand 24 des Getriebes ab, ist gegenüber dieser jedoch geringfügig radial verschieblich, um Relativbewegungen der Welle 7 gegenüber dem Getriebe ausgleichen zu können. Eine drehfeste Anordnung des Betätigungszylinders 3 gegenüber der Wand 24 wird durch Bolzen 25 erreicht, von denen nur einer gezeigt ist.

Bei dem Kolben-Zylinder-System bestehend aus Betätigungszylinder 3 und Kolben 6 kann es sich um ein solches in gezogener oder gedrückter Bauart handeln.

Um eine besonders kompakte und einfache Versorgung des Kolben-Zylinder-Systems und namentlich des Druckraums 8 mit Hydrauliköl zu erreichen, weist die Getriebeeingangswelle 7 eine koaxiale Bohrung auf, die als Fluidversorgungsleitung 9 dient. Die Bohrung durchsetzt die Welle 7 komplett, ist jedoch durch ein Verschlusselement 21 in Form einer eingeschlagenen Kugel so verschlossen, dass das (von rechts kommende) Hydrauliköl über die Fluidversorgungsleitung 9 weiter in die Fluidversorgungsleitung 10 fließt, die sich radial in der Welle 7 erstreckt, wobei sich beide Bohrungen 9, 10 schneiden.

Im Betätigungszylinder 3 ist ein ringförmig ausgebildeter Raum 11 (Ringnut) eingearbeitet, der zum Durchfluss des Hydrauliköls dient. An den Raum 11 grenzen radial nach außen weisende Bohrungen 12 an, durch die das Hydraulikfluid vom Raum 11 in den Druckraum 8 gelangt. Zur Abdichtung des Raums 11 im Betätigungszylinder 3 gegenüber der Welle 7 sind zwei Dichtungselemente 13 und 14 in Form von Radialwellendichtungen vorgesehen. Die Abdichtung des Druckraums 8 erfolgt mit einem weiteren Dichtungselement 16, das am dem Druckraum 8 zugewandten axialen Ende des Kolbens 6 angeordnet ist.

Damit gegebenenfalls über undichte Stellen austretendes Hydrauliköl zurück ins Getriebe abgeleitet werden kann, ist in der Wand 24 eine Ablaufbohrung 17 vorgesehen, die unter einem Winkel - im Ausführungsbeispiel ca. 30° - zur Achse der Welle 7 nach unten weisend ausgerichtet ist. An der dem Kupplungsausrücksystem 1 zugewandten Seite der Wand 24 fluchtet die Ablaufbohrung 17 mit einer sich in axiale Richtung erstreckenden Verbindungsbohrung 18, die in den Betätigungszylinder eingearbeitet ist. Diese steht wiederum mit radialen Bohrungsabschnitten 19 und 20 in Verbindung, die einmal zu dem Bereich des Radiallagerelements 1 5 und einmal zu dem Bereich des ringförmig ausgebildeten Raums 11 führen. Von dort austretende Öl wird somit in das Getriebe zurückgeleitet, so dass Leckageverluste bedeutungslos bleiben.

Durch geeignete steuer- oder regelbare Pumpelemente (nicht dargestellt) wird Drucköl (von rechts) in die Fluidversorgungsleitung 9 geleitet. Damit ist ein Schalten der Kupplung 2 möglich, d. h. das Ein- bzw. Ausrücken der Kupplung 2 wird hierdurch veranlasst.

### Bezugszeichenliste

- 1: Kupplungsausrücksystem
- 2: Reibungskupplung
- 3: Betätigungszylinder
- 4: Kupplungselement (Tellerfeder)
- 5: Kupplungselement (Anpressplatte)
- 6: Kolben
- 7: Welle (Getriebeeingangswelle)
- 8: Druckraum
- 9: Fluidversorgungsleitung
- 10: Fluidversorgungsleitung
- 11: ringförmig ausgebildeter Raum
- 12: radiale Bohrung
- 13: Dichtungselement
- 14: Dichtungselement
- 15: Radiallagerelement
- 16: Dichtungselement
- 17: Ablaufbohrung
- 18: Verbindungsbohrung
- 19: radialer Bohrungsabschnitt
- 20: radialer Bohrungsabschnitt
- 21: Verschlusselement (Kugel)
- 22: Kupplungsscheibe
- 23: Schwungrad
- 24: Getriebewand
- 25: Bolzen

## Patentansprüche

1. Fluidbetätigbares Kupplungsausrücksystem (1) für eine Reibungskupplung (2), insbesondere für ein Kraftfahrzeug, das einen mit Druckfluid beaufschlagbaren Betätigungszylinder (3) aufweist, in dem ein ein Kupplungselement (4, 5) axial bewegender Kolben (6) verschieblich angeordnet ist, wobei das Kupplungselement (4, 5) konzentrisch zu einer Welle (7) angeordnet ist und wobei der Betätigungszylinder (3) und der Kolben (6) einen Druckraum (8) einschließen, der von einer Fluidversorgungsleitung (9, 10) mit Druckfluid versorgt wird,
**dadurch gekennzeichnet,**
**dass** sich die Fluidversorgungsleitung (9, 10) zumindest teilweise axial durch die Welle (7) erstreckt.

2. Kupplungsausrücksystem nach Anspruch 1, **dadurch gekennzeichnet, dass** die Welle (7) eine Getriebeeingangswelle ist.

3. Kupplungsausrücksystem nach Anspruch 1 oder 2, **dadurch gekennzeichnet, dass** das Kupplungselement (4, 5) eine Tellerfeder (4) und eine von dieser beaufschlagte Anpressplatte (5) ist.

4. Kupplungsausrücksystem nach einem der Ansprüche 1 bis 3, **dadurch gekennzeichnet, dass** zumindest ein Teil (9) der Fluidversorgungsleitung (9, 10) als koaxiale Bohrung in der Welle (7) ausgebildet ist.

5. Kupplungsausrücksystem nach einem der Ansprüche 1 bis 4, **dadurch gekennzeichnet, dass** die Fluidversorgungsleitung (9, 10) einen Teil (10) aufweist, der als radiale Bohrung in der Welle (7) ausgebildet ist.

6. Kupplungsausrücksystem nach Anspruch 5, **dadurch gekennzeichnet, dass** die radiale Bohrung (10) etwa in axialer Höhe des Druckraums (8) angeordnet ist.

7. Kupplungsausrücksystem nach Anspruch 5 oder 6, **dadurch gekennzeichnet, dass** die radiale Bohrung (10) in der Welle (7) in einen im Betätigungszylinder (3) eingebrachten ringförmig ausgebildeten Raum (11) mündet.

8. Kupplungsausrücksystem nach Anspruch 7, **gekennzeichnet durch** eine als mindestens eine radiale Bohrung (12) ausgebildete fluidische Verbindung zwischen dem ringförmig ausgebildeten Raum (11) und dem Druckraum (8).

9. Kupplungsausrücksystem nach Anspruch 7 oder 8, **dadurch gekennzeichnet, dass** der ringförmig ausgebildete Raum (11) zur Welle (7) mittels mindestens eines Dichtungselements (13, 14), insbesondere mit mindestens einer Radialwellendichtung, abgedichtet ist.

10. Kupplungsausrücksystem nach einem der Ansprüche 1 bis 9, **dadurch gekennzeichnet, dass** der Betätigungszylinder (3) und der Kolben (6) als konzentrisch zur Welle (7) angeordnete Elemente ausgebildet sind.

11. Kupplungsausrücksystem nach einem der Ansprüche 1 bis 10, **dadurch gekennzeichnet, dass** zwischen dem Betätigungszylinder (3) und der Welle (7) ein Radiallagerelement (15) angeordnet ist.

12. Kupplungsausrücksystem nach Anspruch 11, **dadurch gekennzeichnet, dass** das Radiallagerelement (15) als Gleitlagerhülse ausgebildet ist.

13. Kupplungsausrücksystem nach einem der Ansprüche 1 bis 12, **dadurch gekennzeichnet, dass** an dem dem Druckraum (8) zugewandten axialen Ende des Kolbens (6) ein Dichtungselement (16) angeordnet ist.

14. Kupplungsausrücksystem nach einem der Ansprüche 9 bis 13, **gekennzeichnet durch** eine Ablaufbohrung (17), die mit dem Bereich zumindest eines der Dichtungselemente (13, 14) und/oder mit dem Bereich des Radiallagerelements (15) fluidisch in Verbindung steht.

15. Kupplungsausrücksystem nach Anspruch 14, **dadurch gekennzeichnet, dass** die fluidische Verbindung zwischen dem Bereich der Dichtungselemente (13, 14) bzw. des Radiallagerelements (15) und der Ablaufbohrung (17) durch eine sich axial erstreckende Verbindungsbohrung (18) gebildet wird, von der aus sich mindestens ein radialer Bohrungsabschnitt (19, 20) erstreckt.

16. Kupplungsausrücksystem nach Anspruch 14 oder 15, **dadurch gekennzeichnet, dass** sich die Ablaufbohrung (17) unter einem Winkel zwischen 15° und 50° zur Achsrichtung der Welle (7) nach unten erstreckt.

17. Kupplungsausrücksystem nach einem der Ansprüche 4 bis 16, **dadurch gekennzeichnet, dass** ein Teil (9) der Fluidversorgungsleitung (9, 10) von einer die Welle (7) durchsetzenden koaxialen Bohrung gebildet wird, die mit einem Verschlusselement (21) an einer axialen Position verschlossen ist.
